# DEMANDE DE BREVET EUROPEEN

(11) **EP 0 940 821 A1**
(43) Date de publication de la demande: **08.09.1999**
(21) Numéro de dépôt: 99400483.6
(22) Date de dépôt: 01.03.1999
(51) Int. Cl.: H01B 12/16

(54) **Procédé pour le maintien à basse température d' une cryoliaison supraconductrice**

(30) Priorité: 05.03.1998 FR 9802683
(71) Demandeur: ALCATEL, 75008 Paris (FR)
(72) Inventeur: Verhaege, Thierry, 91160 Saulx les Chartreux (FR); Herrmann, Peter Friedrich, 91410 Corbreuse (FR); Moisson-Franckhauser, François, 91220 Bretigny sur Orge (FR)
(74) Mandataire: Buffière, Michelle

(57) **Abrégé**

Procédé pour le maintien à basse température d'une cryoliaison supraconductrice au moyen d'un débit d'azote liquide produit par un liquéfacteur (1) alimentant l'une des extrémités du tronçon de liaison, dont le tronçon est alimenté par un liquéfacteur (1) unique et en ce que l'on procède en un point intermédiaire au moins du tronçon de transport au soutirage d'azote.

## Description

La présente invention concerne le domaine du transport d'électricité par une liaison supraconductrice.

Il est connu dans l'art antérieur de procéder au transport de courant électrique par des tronçons de liaison supraconductrice dont la température est maintenue bien inférieure à 90K dans le but de conserver l'état supraconducteur du câble et d'éviter l'ébullition de l'azote.

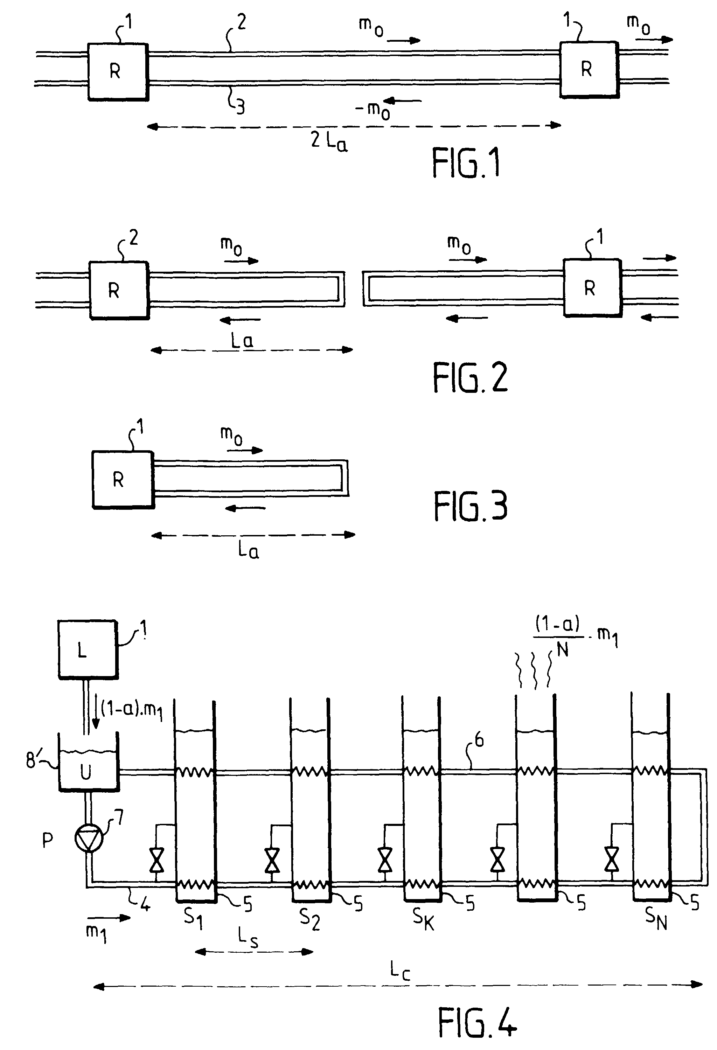

L'architecture habituelle des équipements pour le transport de courant sur de faibles longueurs par des liaisons refroidies à l'azote liquide est illustré par les figures 1 à 3. De tels équipements de l'art antérieur comportent un ensemble de réfrigérateurs d'azote liquide (1) répartis de manière équidistante sur l'installation. Un même débit m₀ d'azote liquide circule dans la canalisation aller (2) et dans une canalisation retour (3), en sens inverse. Les températures de départ et de retour sont par exemple de 70 et 80K.

Dans l'exemple illustré par la figure 1, deux canalisations (2, 3) thermiquement isolées l'une de l'autre présentent une longueur La et la distance entre deux réfrigérateurs consécutifs est donc de La. Les figures 2 et 3 illustrent deux variantes connues dans l'art antérieur. Les caractéristiques de fonctionnement sont inchangées dans le cas de la figure 2 d'un demi tronçon de liaison de longueur La alimenté par un réfrigérateur unique, l'azote liquide circulant dans une boucle de longueur développée 2.Lₐ. Dans la suite de la description, on utilisera cette variante comme référence.

Les architectures de l'art antérieur présentent l'inconvénient de nécessiter une multiplicité de réfrigérateurs répartis le long de la liaison.

Le but de l'invention est de remédier à cet inconvénient en proposant un procédé et une architecture de liaison par des tronçons dont la longueur est de l'ordre de 100 km, voire de plusieurs centaines de kilomètres, dont le coût d'investissement et de maintenance est réduit. A cet effet, l'invention vise à réduire le nombre de liquéfacteurs, et plus précisément à remplacer la multiplicité de réfrigérateurs de capacités réduite, répartis tout au long du tronçon, par une centrale de liquéfaction de plus forte capacité et par des moyens additionnels permettant de maintenir la température de fonctionnement du câble supraconducteur.

A cet effet, l'invention concerne tout d'abord un procédé pour le maintien à basse température d'une cryoliaison supraconductrice au moyen d'un débit d'azote liquide produit par un liquéfacteur alimentant l'une des extrémités du tronçon de liaison, caractérisé en ce que le tronçon est alimenté par un liquéfacteur unique et en ce que l'on procède en un point intermédiaire au moins du tronçon de transport au soutirage d'azote.

Le liquéfacteur alimente l'extrémité amont du tronçon avec un flux d'azote liquide à haute pression, par exemple 10 atmosphères, pour compenser les pertes de charge le long du tronçon. Tout au long du tronçon, des faibles quantités d'azote liquide sont prélevées et détendues, de façon à abaisser la température localement. L'azote vaporisé est éventuellement transmis au liquéfacteur par un conduit de grande section, non isolé thermiquement. L'azote vaporisé peut également être rejeté dans l'atmosphère, éventuellement après réchauffage.

Ce procédé selon l'invention permet de limiter la pression et/ou la section du tronçon et/ou le nombre de liquéfacteurs de façon significative.

Selon une première variante, on procède au soutirage d'azote sur un tronçon comportant une canalisation aller et une canalisation retour, par une pluralité de stations de soutirage comportant un échangeur pour le refroidissement des deux canalisations.

Selon une deuxième variante, on procède au soutirage d'azote en un point amont du tronçon, et on maintient un bain d'azote liquide autour d'une paroi d'échanges entourant la canalisation.

Selon une troisième variante, on procède au soutirage en une pluralité de points répartis sur un tronçon comportant une canalisation unique.

Selon une quatrième variante, on procède à la séparation des canalisations dans la partie amont du tronçon, et au regroupement des canalisations à l'extrémité aval du tronçon.

Avantageusement, la pression amont du fluide caloporteur est sensiblement égale à 10 bars.

L'invention concerne également un équipement de transport d'énergie électrique par un câble supraconducteur, comprenant une canalisation entourant le câble supraconducteur pour la circulation d'un fluide caloporteur à très basse température et un liquéfacteur pour l'alimentation de ladite canalisation, caractérisé en ce qu'il comporte au moins un dispositif de soutirage prélevant une partie du fluide caloporteur en aval du liquéfacteur.

De préférence, l'équipement selon l'invention comporte une pluralité de dispositifs de soutirage comprenant un échangeur de chaleur.

Avantageusement, la canalisation présente à sa partie aval un orifice de soutirage muni d'une vanne commandée par un moyen de contrôle du niveau de fluide caloporteur soutiré, ledit orifice communiquant avec élément tubulaire entourant la canalisation, et présentant à son extrémité amont un orifice pour le rejet du fluide gazeux.

L'invention sera mieux comprise à la lecture de la description qui suit, se référant aux dessins où :
- les figures 1 à 3 représentent des vues schématiques des architectures de l'art antérieur ;
- la figure 4 représente une vue schématique d'un élément de liaison à deux canalisations parallèles ;
- la figure 5 représente une vue en coupe d'un tronçon de liaison ;
- la figure 6 représente une vue schématique du dispositif de soutirage entre secteurs d'une liaison ;
- la figure 7 représente une vue schématique d'une installation comportant une canalisation unique et des stations de soutirage réparties ;
- la figure 8 représente un demi-tronçon de liaison avec 3 canalisations comportant des stations de soutirage réparties ;
- la figure 9 représente une vue schématique d'un tronçon à soutirage continu ;
- la figure 10 représente une vue schématique d'un demi-tronçon avec deux canalisations et des détentes globales ;
- la figure 11 représente une vue schématique d'une liaison à canalisation unique, avec inversion de débit, avec des détentes réparties ;
- la figure 12 représente une vue schématique d'une liaison à canalisation unique, sans inversion de débit, avec des détentes réparties ;
- la figure 13 représente une vue schématique d'une liaison avec des stations de soutirage et de pressurisation réparties.

La figure 4 représente une vue schématique d'un demi-tronçon de liaison de base à deux canalisations (4, 6) parallèles.

La canalisation (4) est alimentée en azote liquide par un liquéfacteur (1) relié à un réservoir d'azote liquide (8). Le demi-tronçon d'une longueur L_{c} est divisé en N secteurs égaux, de longueur Lₛ. Entre deux secteurs consécutifs, une faible part du débit d'azote circulant dans la canalisation aller (4) est détendue jusqu'à la pression atmosphérique par un poste de soutirage (5). L'échange de chaleur entre le bain d'azote ainsi obtenu à 77K et les deux canalisations aller (4) et retour (6) provoque l'abaissement de la température des deux canalisations (4, 6) et entraîne l'ébullition de la totalité de l'azote soutiré sur la canalisation aller (4). La canalisation retour (6) ne subit pas de soutirage. Le débit d'azote restant non soutiré dans la canalisation aller (4) décroît de m₁ à (a.m₁) sur la canalisation aller (4), par N saut de même valeur. Le débit dans la canalisation de retour (6) reste égal à (a.m₁).

Le demi-tronçon comporte par ailleurs une pompe de circulation (7) dont le débit est m₁. Elle assure la circulation d'azote liquide provenant du liquéfacteur (1) avec un débit (1-a.m₁) et de la canalisation de retour (6) avec un débit (a.m₁).

Les pertes à évacuer sont proportionnelles à la longueur L_{C} du demi-tronçon. Le débit total (1-a.m₁) soutiré et rejeté sous forme gazeuse vers 77K prend en compte les mêmes pertes qu'un débit de liquide environ 10 fois plus grand, évoluant entre 70K et 80K.

Afin de tenir compte des fluctuations saisonnières des pertes et de la puissance frigorifique, un recyclage a supérieur ou égal à 30% est recommandé. L'espacement entre points de soutirages (5) doit être d'autant plus faible que le débit de retour (a.m₁) est faible.

La valeur maximale Lₛ de la distance entre deux points de soutirage consécutifs est déterminée par le fait que, dans chaque secteur du trajet retour parcouru par le débit réduit (a.m₁), l'échauffement reste limité à 82 - 77K.

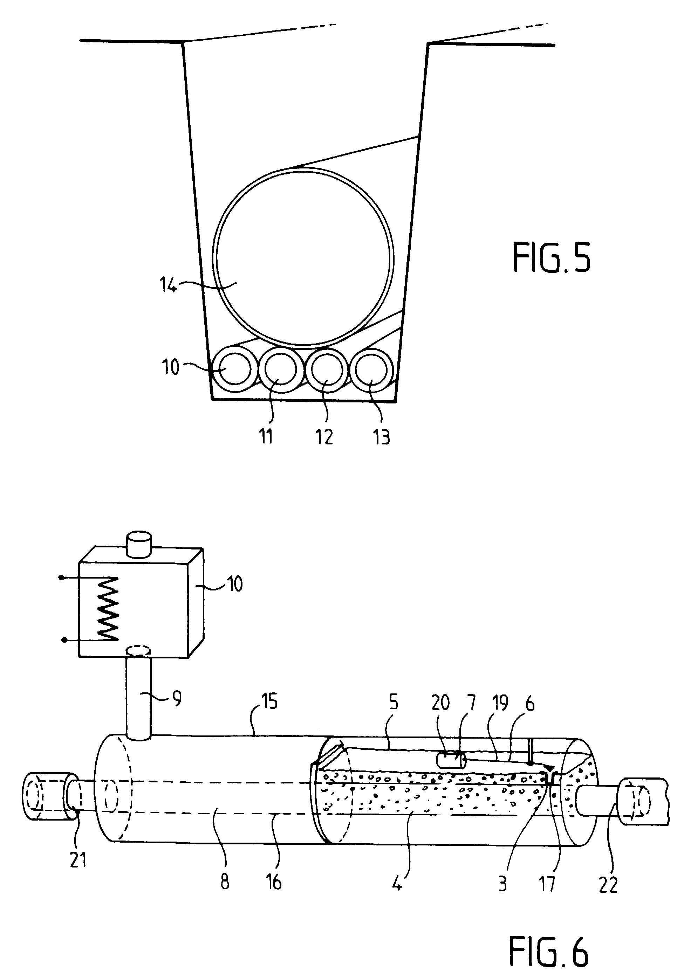

La figure 5 représente une vue en coupe d'un tronçon de liaison. Le tronçon est constitué dans cette variante de réalisation par quatre câbles supraconducteurs (10 à 13) et d'un conduit (14) pour le retour de l'azote provenant des postes de soutirage.

La figure 6 représente une vue schématique du dispositif de soutirage entre secteurs d'une liaison.

Le dispositif de soutirage entoure la section k de la canalisation. La section aval (21) est parcourue par un débit m(k) d'azote liquide à la température maximale de 82K.

La section amont (22) est parcourue par un débit m(k+1) d'azote liquide à la température minimale de 77K.

Le dispositif de soutirage est formé par un manchon tubulaire (15) séparé de la canalisation par une paroi d'échange présentant un orifice de soutirage (17). Cet orifice de soutirage (17) autorise un débit m(k)-m(k+1) d'azote liquide. L'azote liquide qui s'échappe par cet orifice de soutirage (17) vient se détendre dans le manchon tubulaire (15) pour former un bain (18) d'azote en ébullition à 77K. Un dispositif de régulation (19) comprenant un plongeur (20) maintient constant le niveau de bain d'azote liquide en ébullition.

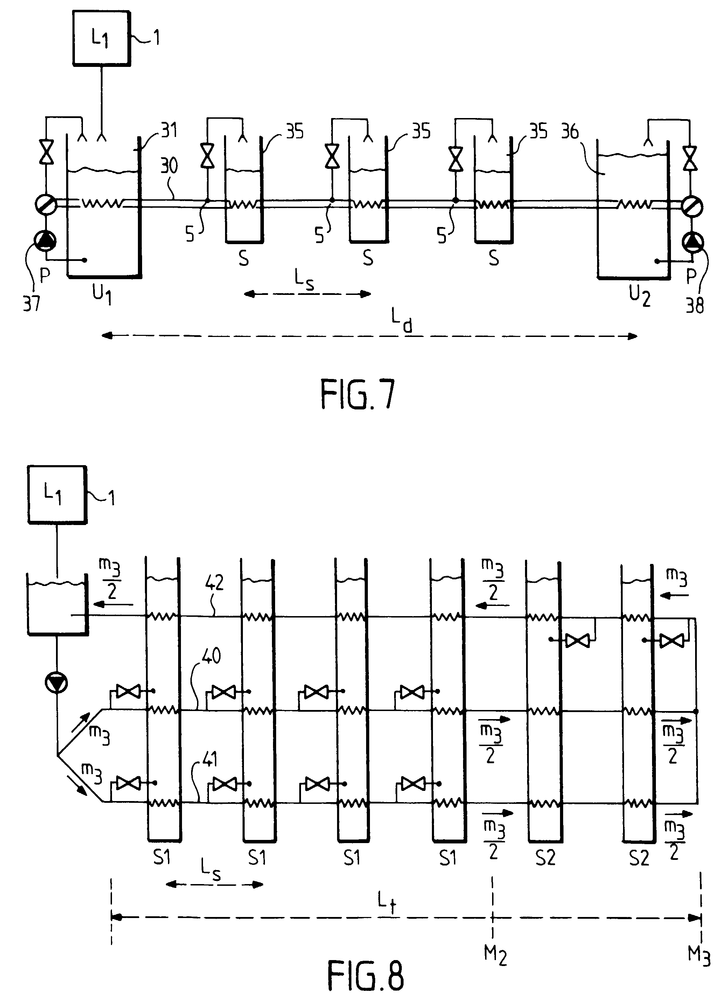

La figure 7 représente une vue schématique d'une installation comportant une canalisation unique et une pluralité de stations de soutirage réparties.

La tronçon de canalisation unique (30) est alimenté par un liquéfacteur unique par l'intermédiaire d'un réservoir amont d'azote liquide à 77K à la pression atmosphérique. L'installation comprend une pluralité de points de soutirage (5) reliés à des stations de soutirage (35), régulièrement espacés pour former des sections de longueur Lₛ. Le tronçon comporte en outre un réservoir aval (36).

Des pompes de circulations (37, 38) sont prévues pour assurer la circulation de l'azote liquide prélevé dans les réservoirs d'extrémité respectivement (31, 36).

Lorsque l'un des réservoirs (31, 36) est plein, le sens de circulation de l'azote liquide est inversé.

La figure 8 représente un demi-tronçon de liaison avec 3 canalisations comportant des stations de soutirage réparties. Le demi-tronçon considéré, alimenté par un liquéfacteur d'azote (1) unique pour longueur Lt. Il comprend deux canalisations aller (40, 41) et une canalisation retour (42). Ce demi-tronçon est segmenté en N sections séparées par des points de soutirage d'azote. On désigne par m₃ les débits amonts communs aux deux canalisations (41, 41) aller. Au bout des 2/3 du parcours aller, les deux débits restent constants et égaux, d'une valeur d'environ 0,5 m₃. Ils sont regroupés ensuite dans la canalisation unique de retour (42), sous forme de débit décroissant de m₃ à 0,5 m₃ pendant le premier tiers du parcours de retour, puis d'un débit constant de 0,5m₃ jusqu'au liquéfacteur unique considéré.

Ainsi, sur la totalité du parcours, la présence d'une ou de 2 canalisations où le débit est minimal (0,5 m₃) impose que les points de soutirage doivent rester équidistants pour assurer un échauffement identique de tous les secteurs. Le débit évaporé pour maintenir la température des canalisations d'une longueur globale de 3 Lₜ avec soutirage est déduit du débit m₀ servant au maintien en froid d'une canalisation de référence sans soutirage, de longueur Lₐ.

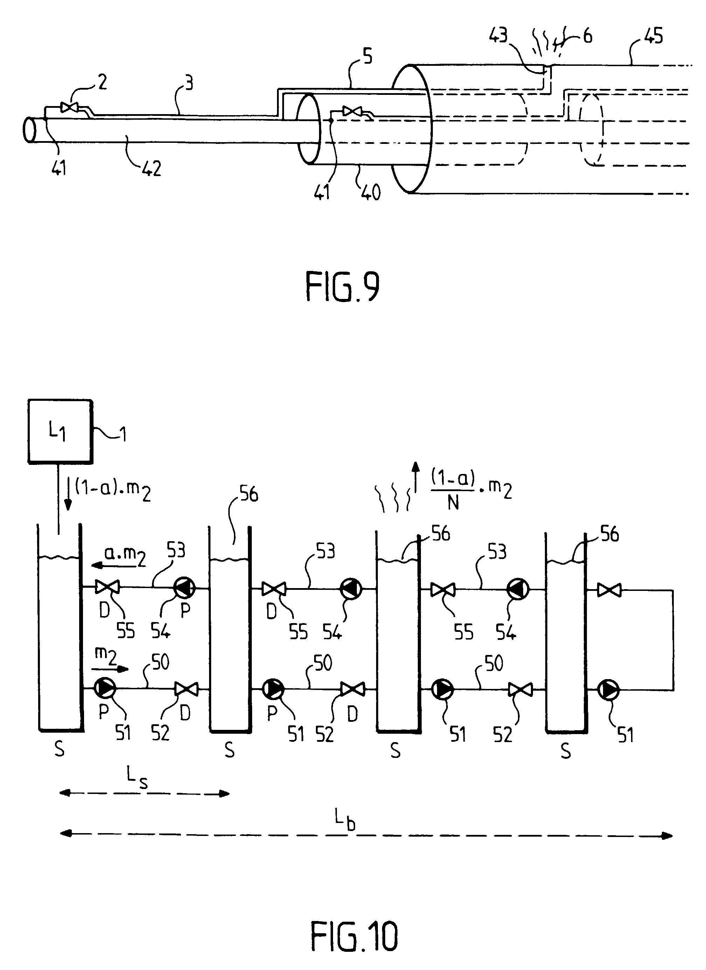

La figure 9 représente une vue schématique d'un tronçon à soutirage continu.

Dans les variantes précédentes, le soutirage d'azote était pratiqué ponctuellement, en une pluralité de points régulièrement espacés. Le soutirage était pratiqué dans ces variantes par des stations de soutirage séparées par des secteurs comprenant 1, 2, ou 3 canalisations isolées thermiquement les unes des autres. Dans l'installation représentée en figure 9, le soutirage est fait de façon continue. les échangeurs sont remplacés par des canaux (40) répartis tout le long de la liaison, au contact thermique des canalisations (42) contenant les câbles. L'azote soutiré est détendu à l'extrémité amont (41) de chaque élément de canal (40) et parcourt la longueur du canal (40) jusqu'à l'obtention d'azote gazeux, avant son rejet à la pression atmosphérique par un échappement (43). Une enceinte (45) entoure l'ensemble de l'installation. Cette enceinte (45) est à la température ambiante.

Cette variante permet d'éviter l'usage de stations de soutirage mettant en oeuvre des échangeurs thermiques. Elle autorise par ailleurs le contact thermique entre les canalisations parallèles contenant les câbles.

Elle évite de plus l'évolution axiale de la température entre 77K et 82K le long des secteurs. La température des câbles supraconducteurs reste plafonnée vers 77K au lieu de 82K, ce qui garantit des performances améliorées.

La figure 10 représente une vue schématique d'un demi-tronçon avec deux canalisations et des détentes globales. Dans cette autre variante, chaque demi-tronçon est segmenté en N secteur de longueurs inégales. Les secteurs les plus longs se trouvent situées du coté opposé à l'extrémité où se trouve le liquéfacteur (1).

Entre deux secteurs consécutifs de rang k-1 et k se trouve un bain d'azote liquide à 77K, à la pression atmosphérique.

Chacun des secteurs aller (50) est parcouru par un même débit d'azote liquide m₂ indépendant du rang k de ce secteur. A l'extrémité amont de chaque secteur aller (50) un circulateur froid (51) porte à la pression p0 le débit d'azote liquide puisé à 77K dans le bain de rang k-1. A l'extrémité aval de ce secteur, le débit d'azote liquide dont la pression aval excède 3 bars et dont la température aval ne dépasse pas 82K est détendu en totalité à la pression atmosphérique par un détendeur (52). Ce débit d'azote détendu alimente le bain suivant de rang k.

Chacun des secteurs retour (53) comprend également un circulateur froid (54) à son extrémité k+1 et un détendeur (55) à son extrémité k.

Le bain d'azote (56) de rang k est alimenté par deux canalisations : la canalisation aller (50) de rang k, et la canalisation retour (53) de rang k+1. Les pertes totales évacuées par le rejet d'azote gazeux au dessus de ce bain sont proportionnelles à la somme des longueurs des deux canalisations incidentes. Le débit d'azote dans la canalisation retour (53) décroît par palliers successifs depuis une valeur maximale m₂ à l'extrémité opposée au liquéfacteur (1), jusqu'à une valeur de recyclage a.m₂ à l'extrémité alimentée par le liquéfacteur (1). Cette variante évite de cumuler les pertes de charge créées dans les secteurs successifs.

En théorie, la longueur de liaison pouvant être alimentée à partir d'un liquéfacteur d'extrémité n'est plus limitée à condition que :
- la longueur Ls de chaque secteur parcourue par le débit aller commun, proportionnel à la longueur totale Lb de la liaison, soit limitée afin que les pertes de charge n'excèdent pas (p0-3 bars) ;
- l'échauffement de la canalisation de retour, dans laquelle le débit chute par palliers jusqu'au débit de recyclage a.m₂ reste plafonnée à 82K - 77K.

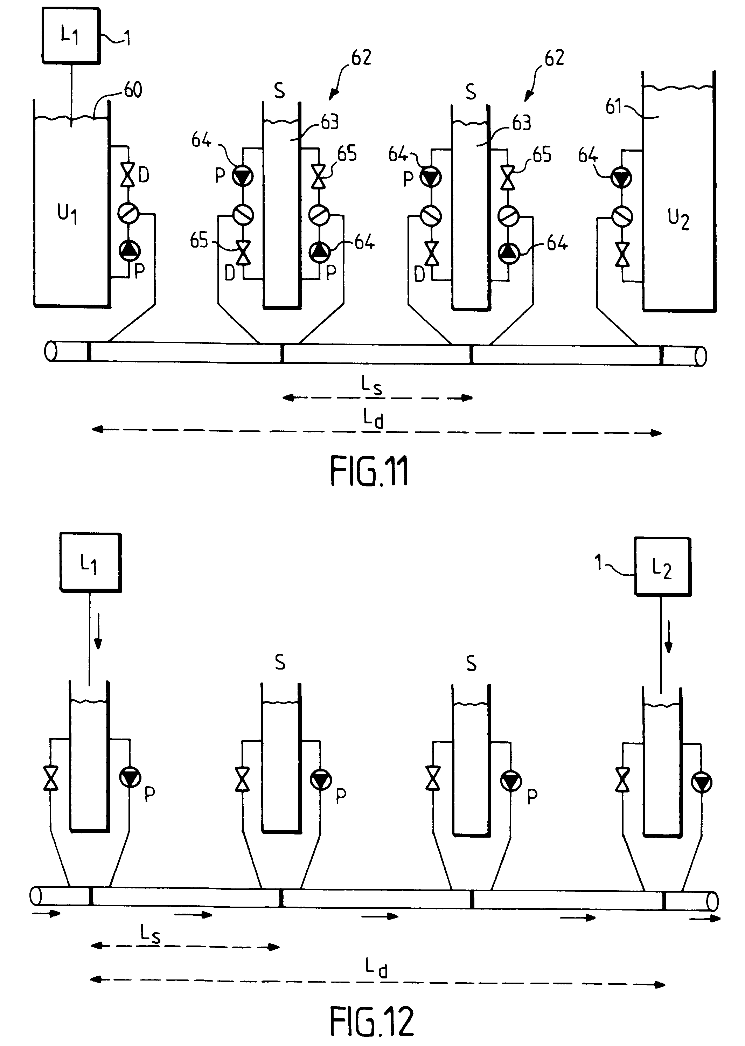

La figure 11 représente une vue schématique d'une liaison à canalisation unique, avec inversion de débit, avec des détentes réparties. La liaison comporte un ensemble de liquéfacteurs (1) espacés et des réservoir (60, 61) aux deux extrémités de la liaison. Le débit partiel transmis jusqu'à l'extrémité aval de la liaison alimente le réservoir aval (61) en azote liquide à 77°K à la pression atmosphérique. Lorsque le réservoir aval (61) est plein, on inverse le sens de circulation de l'azote liquide dans la liaison. Contrairement aux variantes de soutirages multiples, le débit amont n'est plus limité par la somme des pertes de charge dans tous les secteurs, maris par la perte de charge globale rapportée à un secteur seul. L'accroissement ainsi permis du débit amont et de la longueur entre liquéfacteurs permet de majorer la longueur unitaire des secteurs sans dépasser l'échauffement limite le long de chaque secteur. Cela permet de réduire de moitié la cryogénie, si une enceinte unique suffit pour contenir le cryocâble au lieu de deux enceintes de même diamètre que la précédente. On désigne par Ld la longueur d'un tronçon de liaison compris entre un liquéfacteur (1) et un réservoir terminal (61). Deux tronçons peuvent être utilisés tête-bêche l'un au bout de l'autre, formant un ensemble de longueur 2.Ld entre liquéfacteurs, utilisant un réservoir terminal commun situé au centre en x=Ld.

Chaque tronçon est subdivisé en une somme de secteurs. La longueur Ls d'un secteur doit :
- présenter une longueur critique Lsl pour laquelle l'échauffement en régime permanent vaut la moitié de l'échauffement critique (cet échauffement est doublé au moment de l'inversion du sens de circulation de l'azote ;
- présenter une longueur critique LS2 pour laquelle la perte de charge entre extrémités de ce secteur atteint la valeur du cas de référence.

Entre chaque secteur, l'installation comporte une station (62) comprenant un bain de décantation (63) contenant de l'azote liquide à 77K à une pression d'un bar. Une pompe (64) assure la circulation de l'azote provenant du bac de décantation (63). Le débit d'azote recomprimé est piloté par un dispositif à flotteur.

Le premier secteur, situé à proximité du liquéfacteur (1), reçoit d'abord un débit maximum amont m4 créant la perte de charge maximale admise Æp. Ensuite, lorsque le sens du débit a été inversé, ce premier secteur reçoit un débit amoindri (a.m4) produisant un échauffement 0,5Ætmax.

Cette variante est particulièrement avantageuse. Dans chaque station de détente (62), la totalité du débit détendu reste à l'état liquide et est recomprimée à l'entrée du secteur suivant. Le réservoir (63) contenant le bain d'azote à 77K à la pression atmosphérique peut être minimisé.

La figure 12 représente une vue schématique d'une liaison à canalisation unique, sans inversion de débit, avec des détentes réparties.

Chaque tronçon est subdivisé en secteur comme pour la variante précédente. a l'extrémité aval de chaque tronçon, un liquéfacteur (1) ajoute le débit d'appoint (1-a).m₅ au débit final a.m₅ de ce tronçon, le tout alimentant le tronçon suivant.

Le tronçon final de cette liaison comportera un réservoir d'extrémité avec une inversion périodique du débit ou une seconde canalisation pour le retour d'azote liquide.

En présence de plusieurs liaisons interconnectées, le débit d'azote liquide est réutilisable pour une autre liaison issue du même noeud d'interconnexion. L'élimination de ce tronçon final est possible si plusieurs liaisons à canalisation unique sont adjacentes ou disposées pour constituer une boucle.

Cette variante permet d'éviter la duplication des pompes froides et détendeurs nécessaires dans le cas d'inversion du débit. Par contre, le gain en longueur est moindre, de l'ordre de 14,5 par rapport à l'installation de référence.

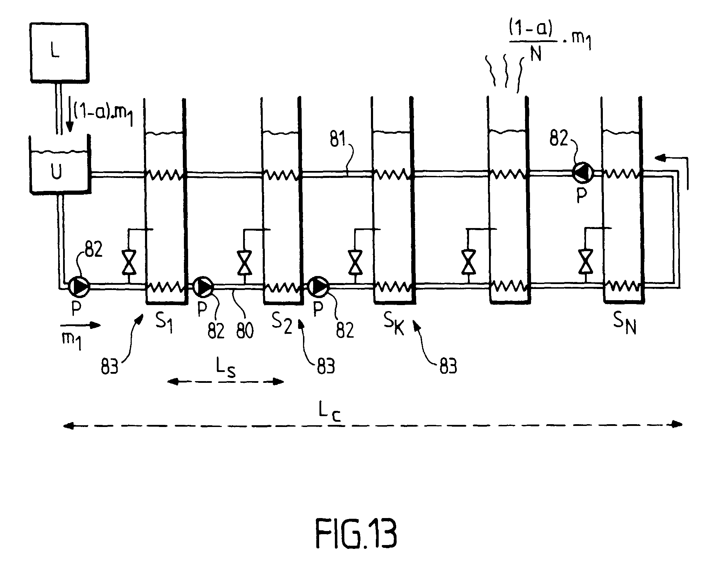

La figure 13 représente une vue schématique d'une liaison avec des stations de soutirage et de pressurisation réparties.

L'installation selon cette variante met en oeuvre deux canalisations (80, 81) à détentes globales. Chaque station de soutirage (83) comporte une pompe élevant la pression de l'azote liquide non soutiré.

Dans la partie aval de la canalisation aller (80), et surtout le long de la canalisation retour (81) parcourue par un débit réduit, les pompes (82) peuvent assurer la pressurisation de plusieurs secteurs consécutifs.

L'invention est décrite dans ce qui précède à titre d'exemples non limitatifs.

Le différentes variantes décrites sont toutes destinées à permettre un espacement maximum des liquéfacteurs assurant le maintien en froid d'une cryoliaison par de l'azote liquide.

Ces variantes sont toutes basées sur l'abaissement de la température du débit restant, liée à l'élimination de parts successives du débit total. Le rejet s'effectue en phase gazeuse dans des stations séparant les secteurs successifs d'un même tronçon.

La détente de l'azote liquide pressurisé jusqu'à la pression atmosphérique se fait au moyen de valves JOULE-THOMSON pour créer un bain d'azote liquide à 77K à chaque station. Une variante de mise en oeuvre consisterait à réaliser la détente de l'azote par une turbine, avec extraction de puissance mécanique.

Les installations selon l'invention peuvent être classées en deux familles de variantes.

La première famille concerne des installations dans lesquelles une fraction du débit de liquide d'environ 10% est prélevée et détendue. Un échangeur est alors utilisé pour refroidir le débit non soutiré, en portant à l'ébullition la partie de l'azote soutirée restée liquide après la détente Joule-Thomson.

La deuxième famille concerne des installations dans lesquelles la totalité du débit de liquide incident est détendue à la pression atmosphérique, ce qui assure que la partie recomprimée alimentant le ou les secteurs suivants présente bien la température initiale de 77K. On évite ainsi l'échangeur. Par contre, il est nécessaire d'utiliser des pompes froides pour recomprimer l'azote liquide.

L'homme du métier sera à même de réaliser diverses variantes sans pour autant sortir du cadre de l'invention.

En particulier il est possible d'effectuer le soutirage par une pompe ou un turbo-compresseur créant une pression inférieure à la pression atmosphérique , et donc une température inférieure à 77K, et il en découle une amélioration pour les performances du câble et/ou une distance accrue entre les soutirages.

## Revendications

1. Procédé pour le maintien à basse température d'une cryoliaison supraconductrice au moyen d'un débit d'azote liquide produit par un liquéfacteur (1) alimentant l'une des extrémités du tronçon de liaison, caractérisé en ce que le tronçon est alimenté par un liquéfacteur (1) unique et en ce que l'on procède en un point intermédiaire au moins du tronçon de transport au soutirage d'azote.

2. Procédé pour le maintien à basse température d'une cryoliaison supraconductrice selon la revendication 1 caractérisé en ce que l'on procède au soutirage d'azote sur un tronçon comportant une canalisation aller et une canalisation retour, par une pluralité de stations de soutirage comportant un échangeur pour le refroidissement des deux canalisations.

3. Procédé pour le maintien à basse température d'une cryoliaison supraconductrice selon la revendication 1 caractérisé en ce que l'on procède au soutirage d'azote en un point amont du tronçon, et en ce que l'on maintienne un bain d'azote liquide autour d'une paroi d'échanges entourant la canalisation.

4. Procédé pour le maintien à basse température d'une cryoliaison supraconductrice selon la revendication 1 caractérisé en ce que l'on procède au soutirage en une pluralité de points répartis sur un tronçon comportant une canalisation unique, et en ce que l'on inverse périodiquement le sens de circulation de l'azote liquide.

5. Procédé pour le maintien à basse température d'une cryoliaison supraconductrice selon la revendication 1 caractérisé en ce que l'on procède à la séparation des canalisations dans la partie amont du tronçon, et au regroupement des canalisations à l'extrémité aval du tronçon.

6. Procédé pour le maintien à basse température d'une cryoliaison supraconductrice selon l'une quelconque des revendications précédentes caractérisé en ce que la pression de fluide caloporteur est sensiblement aller égale à 10 bars.

7. Équipement de transport d'énergie électrique par un câble supraconducteur, comprenant une canalisation entourant le câble supraconducteur pour la circulation d'un fluide caloporteur à très basse température et un liquéfacteur (1) pour l'alimentation de ladite canalisation, caractérisé en ce qu'il comporte au moins un dispositif de soutirage prélevant une partie du fluide caloporteur en aval du liquéfacteur (1).

8. Équipement de transport d'énergie électrique par un câble supraconducteur selon la revendication 6 caractérisé en ce qu'il comporte une pluralité de dispositifs de soutirage comprenant un échangeur de chaleur.

9. Équipement de transport d'énergie électrique par un câble supraconducteur selon la revendication 6 caractérisé en ce que la canalisation présente à sa partie aval un orifice de soutirage muni d'une vanne commandée par un moyen de contrôle du niveau de fluide caloporteur soutiré, ledit orifice communiquant avec élément tubulaire entourant la canalisation, et présentant à son extrémité amont un orifice pour le rejet du fluide gazeux.

10. Équipement de transport d'énergie électrique par un câble supraconducteur selon la revendication 6 caractérisé en ce qu'il comporte des moyens pour l'inversion du sens de circulation de l'azote liquide.
